Europäisches Patentamt

European Patent Office

Office européen des brevets

(11) Publication number: **0 329 876 B1**

# EUROPEAN PATENT SPECIFICATION

(45) Date of publication of patent specification: **10.06.92** (51) Int. Cl.5: **A01G 9/00**

(21) Application number: **88301616.4**

(22) Date of filing: **25.02.88**

(54) **Decorative plant picture assembly.**

(43) Date of publication of application:
**30.08.89 Bulletin 89/35**

(45) Publication of the grant of the patent:
**10.06.92 Bulletin 92/24**

(84) Designated Contracting States:
**DE FR GB**

(56) References cited:
**GB-A- 902 550**
**GB-A- 2 065 059**
**US-A- 1 887 139**
**US-A- 3 869 829**

(73) Proprietor: **Fukuda, Manabu**
**122, Takano 1-chome**
**Misato-shi Saitama-Ken(JP)**

(72) Inventor: **Fukuda, Manabu**
**122, Takano 1-chome**
**Misato-shi Saitama-Ken(JP)**

(74) Representative: **Dealtry, Brian et al**
**Eric Potter & Clarkson St. Mary's Court St.**
**Mary's Gate**
**Nottingham NG1 1LE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to decorative plant picture assembly in which leaves or flowers of growing plants are used as constituents for creating a picture pattern or design.

Framed pictures are usually hung on walls of a room for decorating offices, reception rooms or the like such as in homes, schools, of other buildings.

However, it may be said that such framed pictures are lacking in variety as a decorative material because the picture pattern or design is not changeable in itself. Moreover, it is not always easy and can be troublesome to take care of house plants or potted plants in a room or office, and particularly for flowering plants, the plants will lose their appeal after the flower season has passed.

In US-A-1887139 there is disclosed a plant picture assembly for supporting cut flowers in a particular pattern, and in GB-A-902550 there is described a novelty article from which to grow seeds.

An object of this invention, however, is to provide a new type decorative plant picture assembly in which growing leaves or flowers of plants are made as constructional components of a picture or a part of the picture to thereby impart a graceful feeling, adding variety to the picture as a decorative article.

This object can be achieved, according to this invention, by providing a decorative plant picture assembly wherein a box-shaped base body having an opening on one side is prepared, a liquid-retaining material is packed in the box-shaped base body, and a mounting material provided with a number of perforations is disposed on the liquid-retaining material so as to cover the entire surface of the opening of the base body. When a number of seeds of plants are embedded in the liquid-retaining material near a rear surface of the mounting material so that the seeds germinate and grow as plant through the perforations on a front surface of the mounting material.

According to the decorative plant picture assembly of the construction described above, the seeds embedded in the liquid-retaining material germinate by properly supplying water preferably with manure or nutrient and grow through the perforations of the mounting material on the front surface thereof, whereby the grown plants constitute a part of the printed picture, or constitute a picture in itself by a suitable arrangement of the perforations. The growing plants vary the picture pattern as the time lapses, thus ensuring the decorative characteristics and imparting continuous amusement to persons. In addition, when the thus constructed picture assembly is accommodated in a picture frame and hung on the wall of a room or the like, the framed picture assembly serves as an interior decoration, and when the picture assembly is placed on a floor or a flower bed, a new plant picture flower bed can be provided.

Reference is now made to the accompanying drawings, in which:-

Figure 1 is a cross-sectional view of a decorative plant picture assembly according to this invention;

Figure 2 is a front view of the picture assembly shown in Figure 1 when the same is applied as a hang-on type picture;

Figure 3 is an enlarged cross-sectional view of a portion of the picture assembly shown in Figure 1 for showing growing condition of plants;

Figure 4 is a brief illustration of the decorative plant picture assembly to which a liquid supply tank are attached;

Figure 5 is a perspective view of a base body of the picture assembly shown in Figure 1 for showing location of perforations for supplying liquid;

Figure 6A is a front view of the base body provided with crosspieces for sectioning the interior of the base body; and

Figure 6B is a cross-sectional view similar to that shown in Figure 1 but provided with crosspieces shown in Figure 6A.

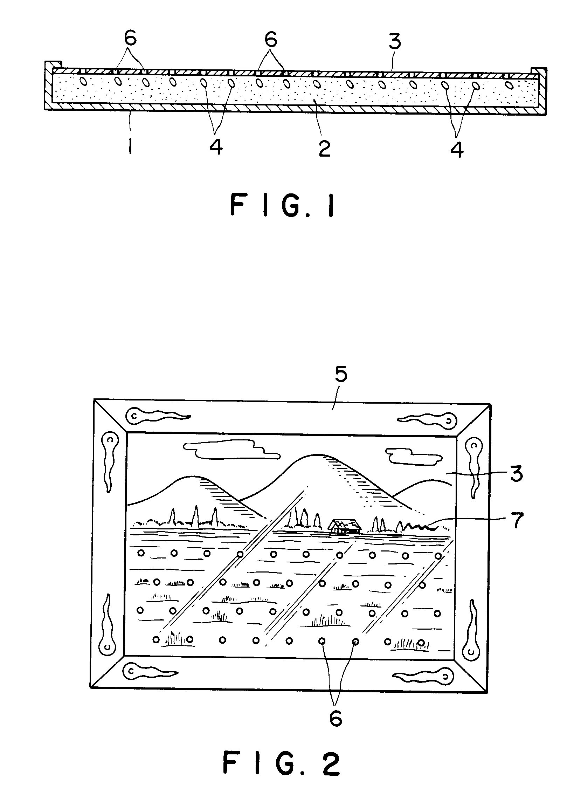

A decorative plant picture assembly according to this invention, as shown in Figure 1 as a cross-sectional view, comprises a flat box-shaped frame-like base body 1 having one opening, a liquid-retaining material 2 having liquid containing ability to be charged in the base body, and a mounting material 3 preferably a mounting sheet, applied on the entire surface of the liquid-retaining material 2 on the opening side of the base body 1. Small seeds or pips 4 of flowers or plants are embedded in the liquid-retaining material 2 near the rear surface of the mounting material 3.

The base body 1 is made of a synthetic resin, for example, and in a case where the plant picture assembly of this invention is utilised as an interior decoration, the base body 1 is accommodated in a picture frame 5, as shown in Figure 2, integrally therewith or as a separate article to be secured thereto.

The liquid-retaining material 2 consists of a liquid bearing material such as continuously foamed resin made in flat-plate shape or consists of a liquid absorbing material having no fixed shape such as cotton packed into the box-shaped base body 1.

The mounting material 3 is made of a plastic sheet, cloth, Japanese paper, or the like material to which a lot of small perforations 6 are formed, the numbers thereof being properly decided as occasion demands in the following manner. In a case where a picture 7 is preliminarily printed on the mounting material 3, the perforations 6 are formed at portions of the printed picture 7 through which plants are to be grown to constitute a portion of a picture pattern. In a case where no picture is preliminarily printed and the mounting material 3 is for example a solid colour sheet, the perforations 6 will be formed in accordance with a desired picture pattern to be constituted by grown plants.

The printing of the picture 7 on the surface of the mounting material 3 will be performed, for example, by means of known rotary press such as disclosed in the Japanese Patent Laid-Open Publication 56-144157, and according to the disclosed method, each printing can be carried out with high printing efficiency and at low cost. As a picture pattern to be printed, although a landscape picture is most available, a still-life picture of plants and a design-like abstract picture are of course appreciable.

The selection of the seeds 4 will be based on the height of a plant after the seed has been grown. The seeds 4 are embedded in the liquid-retaining material 2 at portions near or close to the rear surface of the perforated mounting material 3 to prevent the seeds from displacing and to ensure the germination and growing of the seeds 4 above the front surface of the mounting material 3 through the perforations 6. Particularly, in the case where the perforations 6 have been formed in coincidence with the printed picture pattern, the seeds 4 will be embedded or sowed in correspondence with the locations of the perforations 6.

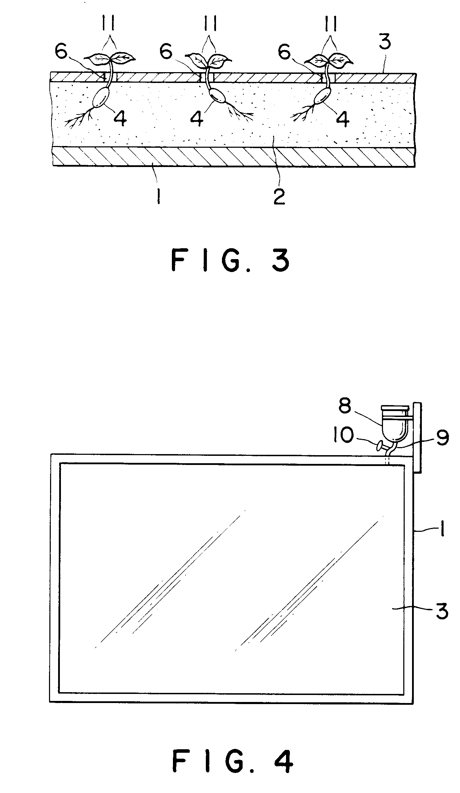

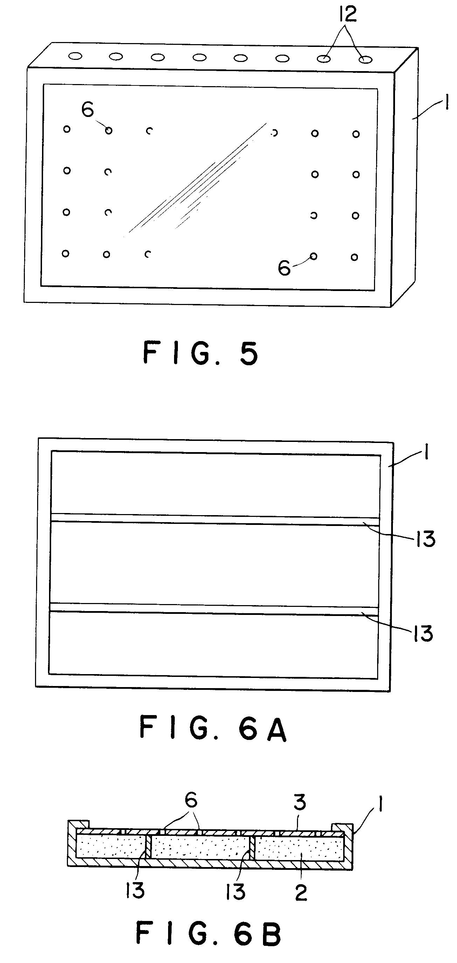

As illustrated in Figure 4, a tank 8 containing a plant feed medium such as water with dissolved manure is attached to the base body 1, and a flexible hose means 9 connecting the tank 8 to the liquid-retaining material 2 is disposed at the bottom of the tank 8. When it is desired to hang the thus prepared picture on the wall of a room, it is preferable to attach the tank 8 to the upper portion of the picture frame accommodating the base body 1. A valve means 10 is located on the way of the flexible hose 9 thereby to optionally supply and gradually perculate the water containing the manure in the tank 8 to the liquid-retaining material 2 to give nutrient to the seeds 4 for facilitating the germination and growth thereof. In a modification, as briefly shown in Figure 5, a plurality of holes 12 may be provided for the upper edge of the base bed 1 for directly supplying water therethrough into the liquid-retaining material 2. In another modification, water with nutrient may be supplied through a plurality of holes provided in the lower edge of the base body 1 by utilising capillary action.

Figure 6 is a brief illustration of this invention in which a plurality of crosspieces are disposed in the base body 1 to divide the liquid-retaining material 2 into a plurality of sections. These crosspieces 13 are utilised for preventing the liquid-retaining material 2 from shifting or displacing when the base body 1 is hung on the wall. It is of course desirable to form a plurality of perforations in the crosspieces 13 to enable the liquid with the nutrient to permeate evenly through the liquid-retaining material 2.

The decorative plant picture assembly of the construction described above will be used in the following manner.

In the case where the plant picture assembly is utilised as an interior decoration by hanging the picture frame 5 accommodating the base body 1, a picture 7 painted on the perforated mounting material 3 will be first enjoyed as if the picture 7 were a conventional framed picture. As time lapses, the seeds 4 embedded in the liquid-retaining material 2 into which water with the nutrient has been supplied germinate and gradually grow above the mounting material 3 through the perforations 6 formed in the mounting material 3 thereby to impart variation to the painted picture 7 as the plant grows, thus giving interest and amusement.

In another application of the decorative plant picture assembly of this invention, the base body 1 is horizontally placed to define a flower bed. The decorative plant picture assembly can be also enjoyed as a placed picture for a "tsubo" (small artificial) garden and the like.

All described and other modifications or variations of this invention are intended in the foregoing disclosure. The invention should therefore be construed broadly and in a manner consistent with the fair meaning or proper scope of the following claims.

## Claims

1. A decorative plant picture assembly comprising a box-shaped base body (1) having an opening on one side, a liquid-retaining material (2) packed in said base body (1), a mounting material (3) provided with a number of perforations (6) disposed against the liquid-retaining material (2) so as to cover the entire surface of the opening of said base body (1), characterised in that a number of seeds (4) of plants embedded in said liquid-retaining material (2) near a rear surface of said mounting material (3), that said liquid-retaining material (2) is sectioned by crosspieces (13) provided with a plurality of perforations for passing liquid and that a liquid container (8) is further attached to one side portion of said base body (1) for supplying liquid into said liquid-retaining material (2) through a flexible hose (9) connecting said liquid container and an interior of said base body, the liquid container being provided with valve means (10) for adjusting an amount of liquid supply through said hose (9) so that said seeds (4) germinate and grow as plants through said perforations (6) on a front surface of said mounting material (3).

2. The decorative plant picture assembly according to Claim 1 wherein said perforations (6) are formed so as to match with a picture printed on said mounting material (3).

3. The decorative plant picture assembly according to Claim 1 wherein said perforations (6) are formed so as to constitute a picture pattern on a solid colour mounting material when said seeds (4) grow through said perforations.

4. The decorative plant picture assembly according to any of claims 1 to 3 wherein said liquid-retaining material (2) consists of a continuously foamed resin.

5. The decorative plant picture assembly according to any of Claims 1 to 3 wherein said liquid-retaining material (2) consists of cotton.

6. The decorative plant picture assembly according to any of Claims 1 to 5 wherein said mounting material (3) is a plastic sheet.

7. The decorative plant picture assembly according to any of Claims 1 to 5 wherein said mounting material (3) is a cloth.

8. The decorative plant picture assembly according to any of Claims 1 to 5 wherein said mounting material (3) is a paper.

9. The decorative plant picture assembly according to any of Claims 1 to 8 wherein said base bed (1) has at least one side portion provided with a plurality of perforations (6) through which liquid can be supplied into said liquid-retaining material (2).

10. The decorative plant picture assembly according to any of Claims 1 to 9 wherein said base body (1) is constituted so as to have a function and appearance to serve as a picture frame.

11. The decorative plant picture assembly according to any of Claims 1 to 10 further comprises a picture frame (5) accommodating said base body (1).

12. The decorative plant picture assembly according to any of Claims 1 to 11 wherein said seeds (4) are of flowering plants.

**Revendications**

1. Assemblage en tableau décoratif de plantes, comprenant un corps de base (1) en forme de boîte, doté d'une ouverture sur un côté, un matériau de rétention de liquide (2), garnissant l'intérieur dudit corps de base (1), un matériau de montage (3), pourvu d'un certain nombre de perforations (6), disposé contre le matériau de rétention de liquide (2), de façon à couvrir la totalité de la surface de l'ouverture dudit corps de base (1), caractérisé en ce qu'un certain nombre de graines (4) de plantes sont noyées dans ledit matériau de rétention de liquide (2), près d'une surface arrière dudit matériau de montage (3), que ledit matériau de rétention de liquide (2) est cloisonné par des pièces transversales (13) pourvues d'une pluralité de perforations, pour faire passer le liquide, et qu'un réservoir de liquide (8) est en outre fixé à une partie latérale dudit corps de base (1), pour amener du liquide dans ledit matériau de rétention de liquide (2), par l'intermédiaire d'un tuyau flexible (9) qui relie ledit récipient de liquide et l'intérieur dudit corps de base, le récipient de liquide étant pourvu de moyens servant de soupape (10) pour régler la quantité de liquide amenée par l'intermédiaire dudit tuyau (9).

2. Assemblage en tableau décoratif de plantes selon la revendication 1, dans lequel lesdites perforations (6) sont formées de façon à s'adapter à une image imprimée sur ledit matériau de montage (3).

3. Assemblage en tableau décoratif de plantes selon la revendication 1, dans lequel lesdites perforations (6) sont formées de façon à constituer un motif d'image, sur un matériau de montage coloré massif, lorsque lesdites graines (4) poussent au travers desdites perforations.

4. Assemblage en tableau décoratif de plantes selon l'une quelconque des revendications 1 à 3, dans lequel ledit matériau de rétention de liquide (2) consiste en une résine totalement alvéolaire.

5. Assemblage en tableau décoratif de plantes selon l'une quelconque des revendications 1 à 3, dans lequel ledit matériau de rétention de liquide est du coton.

6. Assemblage en tableau décoratif de plantes selon l'une quelconque des revendications 1 à 5, dans lequel ledit matériau de montage (3) est une feuille en matière synthétique.

7. Assemblage en tableau décoratif de plantes selon l'une quelconque des revendications 1 à 5, dans lequel ledit matériau de montage (3) est un tissu.

8. Assemblage en tableau décoratif de plantes selon l'une quelconque des revendications 1 à 5, dans lequel ledit matériau de montage (3) est du papier.

9. Assemblage en tableau décoratif de plantes selon l'une quelconque des revendications 1 à 8, dans lequel ledit lit de base (1) présente au moins une partie latérale pourvues d'une pluralité de perforations (6), à travers lesquelles du liquide peut être amené dans ledit matériau de rétention de liquide (2).

10. Assemblage en tableau décoratif de plantes selon l'une quelconque des revendications 1 à 8, dans lequel ledit corps de base (1) est constitué de façon à avoir la fonction et l'apparence permettant de servir de cadre de tableau.

11. Assemblage en tableau décoratif de plantes selon l'une quelconque des revendications 1 à 10, comprenant en outre un cadre de tableau (5) recevant ledit corps de base (1)

12. Assemblage en tableau décoratif de plantes selon l'une quelconque des revendications 1 à 11, dans lequel lesdites graines (4) sont des graines de plantes florales.

**Patentansprüche**

1. Pflanzliches Dekorationsbild mit einem schachtelförmigen Basiskörper (1), der auf einer Seite eine Öffnung hat, einem Flüssigkeit zurückhaltenden Material (2), das in den Basiskörper (1) eingefüllt ist, einem Befestigungsmaterial (3), das mit einer Anzahl von Perforationen (6) versehen ist und an dem Flüssigkeit zurückhaltendan Material (2) anliegt, so daß es die gesamte Oberfläche der Öffnung des Basiskörpers (1) bedeckt, dadurch gekennzeichnet, daß eine Anzahl von Pflanzensamen (4) in dem Flüssigkeit zurückhaltenden Material (2) in der Nähe einer rückwärtigen Oberfläche des Befestigungsmateriales (3) eingebettet ist, daß das Flüssigkeit zurückhaltende Material (2) durch Querstege (13) unterteilt ist, die mit einer Vielzahl von Perforationen zum Hindurchlassen von Flüssigkeit versehen sind, und daß ferner an einem Seitenbereich des Basiskörpers (1) ein Flüssigkeitsbehälter (8) für die Zufuhr von Flüssigkeit in das Flüssigkeit zurückhaltende Material (2) über einen flexiblen Schlauch (9) angeordnet ist, der den Flüssigkeitsbehälter und das Innere des Basiskörpers miteinander verbindet, wobei der Flüssigkeitsbehälter mit einer Ventileinrichtung (10) versehen ist, um die Menge der Flüssigkeitszufuhr durch den Schlauch (9) einzustellen, so daß die Samen (4) sprießen und als Pflanzen durch die Perforationen (6) auf der Frontoberfläche des Befestigungsmaterials (3) wachsen.

2. Pflanzliches Dekorationsbild nach Anspruch 1, wobei die Perforationen (6) so geformt sind, daß sie mit einen auf dem Befestigungsmaterial (3) aufgedruckten Bild zusammenpassen.

3. Pflanzliches Dekorationsbild nach Anspruch 1, wobei die Perforationen (6) so geformt sind, daß sie ein Bildmuster auf einem festen farbigen Befestigungsmaterial bilden, wenn die Samen (4) durch die Perforationen wachs

4. Pflanzliches Dekorationsbild nach einem der Ansprüche 1 bis 3, wobei das Flüssigkeit zurückhaltende Material (2) aus einer geschäumten Harzbahn besteht.

5. Pflanzliches Dekorationsbild nach einem der Ansprüche 1 bis 3, wobei das Flüssigkeit zurückhaltende Material (2) aus Baumwolle besteht.

6. Pflanzliches Dekorationsbild nach einem der Ansprüche 1 bis 5, wobei das Befestigungsmaterial (3) ein Kunststoffblatt ist.

7. Pflanzliches Dekorationsbild nach einem der Ansprüche 1 bis 5, wobei das Befestigungsmaterial (3) ein Stoff ist.

8. Pflanzliches Dekorationsbild nach einem der Ansprüche 1 bis 5, wobei das Befestigungsmaterial (3) ein Papier ist.

9. Pflanzliches Dekorationsbild nach einem der Ansprüche 1 bis 8, wobei der Basiskörper (1) zumindest an einem Seitenbereich mit einer Vielzahl von Perforationen (6) versehen ist, durch die Flüssigkeit in das Flüssigkeit zurückhaltende Material (29 Zugeführt werden kann.

10. Pflanzliches Dekorationsbild nach einem der Ansprüche 1 bis 9, wobei der Basiskörper (1) so ausgebildet ist, daß er Funktion und Aussehen eines Bilderrahmens hat.

**11.** Pflanzliches Dekorationsbild nach einem der Ansprüche 1 bis 10, wobei es ferner einen Bilderrahmen (5) aufweist, der an den Basiskörper (1) angepaßt ist.

**12.** Pflanzliches Dekorationsbild nach einem der Ansprüche 1 bis 11, wobei die Samen (4) Samen von blühenden Pflanzen sind.

F I G. 1

F I G. 2

F I G. 3

F I G. 4

F I G. 5

F I G. 6 A

F I G. 6 B